(19) Europäisches Patentamt

European Patent Office

Office européen des brevets

(11) Publication number: **0 338 821 B1**

## EUROPEAN PATENT SPECIFICATION

(45) Date of publication of patent specification: **15.06.94**  (51) Int. Cl.⁵: **A01N 25/34**, A01K 27/00

(21) Application number: **89303916.4**

(22) Date of filing: **20.04.89**

(54) Devices and means for applying substances externally to animals.

(30) Priority: **20.04.88 GB 8809262**

(43) Date of publication of application:
**25.10.89 Bulletin 89/43**

(45) Publication of the grant of the patent:
**15.06.94 Bulletin 94/24**

(84) Designated Contracting States:
**DE ES FR GB IT**

(56) References cited:
EP-A- 0 050 782
DE-A- 2 715 596
US-A- 3 639 583
US-A- 4 065 555
US-A- 4 594 380

(73) Proprietor: **SECTO COMPANY LIMITED
Carlinghurst Road
Blackburn Lancashire BB2 1PW(GB)**

(72) Inventor: **Woolley, Gordon William
Heather Cottage
Woodcock Hill
Pleasington
Blackburn Lancashire BB2 6RB(GB)**

(74) Representative: **Gore, Peter Manson et al
W.P. THOMPSON & CO.
Coopers Building
Church Street
Liverpool L1 3AB (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention relates to devices and means for applying desirable active ingredients, externally to animals, particularly at a predetermined dosage over extended periods. It especially relates to devices which may be attached around the necks of animals including such devices for the protection of such animals from parasites. Particular embodiments of the invention relate to collars and the like which may be placed around the necks of domestics animals, such as, for example, cats and dogs, to protect the animals from fleas and the like.

For many years, collars used to protect animals such as, for example, cats, from fleas, comprised a strap of leather or synthetic leather with a buckle fastened to one end thereof and a series of holes near the other end of the strap so as to be capable of being engaged with a pin or similar engaging member of the buckle to produce a securely fastened collar depending on the size of the neck of the animal. Other types of buckle could also be used. On the side of the strap intended to face the neck of the animal there was provided a layer of absorbent material, of a felt-like or similar nature, which was impregnated with a suitable insecticide.

Such a form of collar irrespective of any active principle such as, for example, an insecticide, had many disadvantages. Among these were the danger that the collar could be caught on an object, for example, fence or a branch of a tree, and so could lead to the animal being caught and even strangled. The homogeneous content and release of the insecticide were difficult to control.

The ready availability of plastics materials in recent years has led to their use in cat collars and the like. Such plastics materials have included thermoplastic materials but it has been usual to incorporate plasticizers to produce a collar which was reasonably pliable and comfortable for the cat to wear.

However, whether a buckle or other means was employed to join the two ends of the collar and secure it about the neck of the animals, there still basically remained the safety problem referred to above in connection with the old-fashioned, leather (or the like) collar. The very small amount of stretching achievable in known thermoplastic collars has been found insufficient for safety and it has become conventional to try and incorporate a safety device in such a collar to prevent the cat or dog becoming trapped. Such a safety device has consisted of a section of elasticated material, such as, for example, conventional braided elastic, being incorporated in one section along the length of the collar. The presence of such an elasticated section has meant that should the cat or dog be caught on an object by the collar, the movement of the cat or dog to try and free its head results in stretching of the elasticated section so that the cat or dog should be able to move its head out of the so-stretched collar and free itself there from. Such an elasticated material section is usually secured to the remainder of the plastics collar by rivets or the like. It has however been found that normal contact of an animal's paws with the collar in the process of washing or scratching rapidly weakens the rivetted junction of plastics and braided elastic or like elasticated materials so that the rivet soon becomes detached from the elasticated material and the collar falls off the neck of the animal.

In substituting plastics material for leather (or the like)/absorbent layer materials, problems have arisen in providing the insecticide so that it can be released in a controlled manner over a substantial period of time. Attempts have been made to solve this problem, for example, providing a reservoir of the insecticide which is then released through perforations or the like in an outer cover. Other attempts have been made to disperse the insecticide within the plastics material so that either it would find its way to the surface and evaporate therefrom or even so that the outer layer of the plastics material containing insecticide would wear away, so bringing insecticide into contact with the animal's fur and consequently the fleas. Problems have arisen not only in obtaining satisfactory uniform dispersion of the insecticide in the thermoplastics material but also achieving satisfactory controlled uniform release of the insecticide over a considerable period of time.

In DE-A- 2 715 596 there is desclosed an animal collar having insecticidal activity. Such a collar contains 2 to 25 percent (based on the collar mass) of an insecticidal active ingredient in a thermoplastic polyurethane elastomer.

In US-A- 4 065 555 there are disclosed compositions for controlled release of insecticides therefrom. The compositions are based on two components, one of which is a block copolymer and the other is a plasticized polyvinyl chloride resin.

By means of the present invention, the safety and controlled release problems of the prior art collars have been overcome.

By means of the present invention there is provided a device capable of being fastened to the neck of an animal which comprises at least a portion of the length of the device being of a material which is an active principle dissolved in or made miscible with an oil or is an active principle in the form of an oil

2

together with a thermoplastic elastomer, and means for attaching the device to the animal.

The present invention also provides a method for the production of a device which comprises forming a material comprising a thermoplastic elastomer and either (a) an oil and an active principle which is soluble or miscible in the oil or (b) an active principle which is an oil, which material comprises at least a portion of the length of the device.

Whilst substantial portions of the following description of the invention make reference to the active principle being an active principle for combatting fleas and particularly an insecticide, the invention is in no manner limited thereto.

The thermoplastic elastomer, having dispersed therein the active principle, may constitute the whole of the length of the collar, apart of course from the buckle and any ornamentation or the like on the collar.

However, in accordance with one embodiment of the present invention the collar may comprise a portion (even a substantial portion) of its length in the form of the known type of collar, but with another portion of its length being composed of the thermoplastic elastomer having dispersed therein the active principle. Thus, the braided elasticated material portion of the known type of collar referred to hereinabove may be replaced by a portion composed of a thermoplastic elastomer having dispersed therein the active principle. In such a collar, the portion composed of the known type of material may also be impregnated with an active principle. The collar of this embodiment has advantages in its assembly and also economic advantages. The thermoplastic elastomer portion can be joined to the known type of leather (or the like)/ absorbent portion by rivetting which is more secure than when braided elasticated material is employed. Also the thermoplastic elastomer is cheaper than the braided elasticated material. Additionally one can have a collar which is actively impregnated with an active principle throughout its length in the case where an all "plastics" collar is not desired.

The active principle may be an insecticide. However, in accordance with the present invention it has been found that Carbaryl ... (1-naphthyl-methylcarbamate) is particularly suitable, especially with respect to its satisfactory dispersion in the thermoplastic elastomer. Whilst about 10% by weight of the Carbaryl has been found particularly suitable, lesser or greater amounts, based on the thermoplastic elastomer, may be employed.

Insecticides which are particularly useful in the embodiment of the present invention relating to flea collars are those which are soluble in NYNAS oil. An oil which has been found useful in preparing the thermoplastic elastomer/active principle composition is NYFLEX 210 which has been defined as a severely solvent refined napthenic oil and is without an aromatic content. ("Nynas" and "Nyflex" are Trade Marks) We have found that using such an oil, insecticides have the following solubilities:-KEY: S:- Soluble. M- Miscible P/M Partially miscible

CARBAMATES

| Carbaryl | S. |
|----------|-----|
| Bendiocarb | S. |

PYRETHROIDS

| Bioresmethrin | M. |
| Bioallethrin | P/M. |
| Cypermethrin | M. |
| Alphacypermethrin | M. |
| Deltamethrin | P/M. |
| Tetramethrin | S. |
| Allethrin | M. |
| Cyphenothrin | M. |
| Permethrin | M. |
| Resmethrin | P/M. |
| Phenothrin | M. |
| Empenthrin | M. |
| Pyrethrins | M. |

Other insecticides which may be suitable include:-

CARBAMATES

Dioxacarb
Fenoxycarb

PYRETHROIDS:

Cyhalothrin
Fenvalerate

Although Carbaryl is the preferred insecticide, other insecticidal materials such as, for example, Diazinon, are not precluded.

As far as is known, the names of the above identified insecticides are Trade Marks.

Fleas and the like can, however, be combatted by the use of materials (active principles) other than insecticides. Also naturally occurring materials, as opposed to the insecticides described above, may also be insecticidally active.

One class of materials which may be used as the active principle are the insect growth regulators or juvenile hormone mimics.

Another class of materials of considerable interest for use in the present invention are repellents which may be synthetic or naturally occurring. Whilst various ketones may be used, a compound which is particularly useful as a repellent is N-diethyl toluamide. Herbal repellents based on natural oils such as, for example, mint, citronella, eucalyptus, pennyroyal, cedarwood, and rue, may be used.

Completely different types of active principles may also be used. Such principles include materials which are beneficial to the health and well-being of animals such as, for example, cats and dogs. Examples of such materials are deodorants, bactericides, coat conditioners, vitamin supplements, fungicides.

It is highly desirable that whatever active principle is used, it is soluble in an oil used in the preparation of the plastic elastomer/active principle composition. It is also highly desirable that the active principle be stable at the temperature used for producing the composition.

The thermoplastic elastomer to be used requires careful selection of ingredient polymers to achieve the degree of elasticity required of at least 40% elastic extension and preferably can be stretched repeatedly at ambient temperature to at least twice their original length, whilst being capable of returning to their original length when not under stress, and whilst offering the properties required to maintain the accommodation and progressive release of the chosen active principle.

Particularly useful thermoplastic elastomers are those materials which are based on styrene and butadiene. An example of such a material is a physical blend of an SBS (styrene-butadiene-styrene) triblock copolymer which may be used together with EVA (ethylene-vinyl acetate) copolymer. A preferred weight ratio of the SBS copolymer:EVA copolymer is in the range of 7:1 to 10:1, but ratios outside this particular range may be employed.

The composition which constitutes the device of the present invention is very versatile enabling the device to be formed by any of several methods. Thus the device may be formed, for example, by extrusion, injection moulding or even cut from large sheets of the composition.

In the attempts made to overcome the prior art problems referred to above, and in leading to the present invention, consideration was given to incorporating an active principle, for example an insecticide into a thermoplastic elastomer by a solution method (using a separate solvent) or using the insecticide just as a dry powder. Difficulty was however experienced in obtaining a homogeneous curing of the elastomer resin.

In prior art operation it has been usual to incorporate the insecticides during actual polymerization to produce the polymer constituting the known plastics material. This incorporation has involved using the insecticide in a dry powder form added to the mix, or in an additional solvent added to the mix. Either form of addition has led to non-homogenity and adverse curing problems, as well as leading to a product with insufficient, if anything more than minimal, elasticity.

In accordance with the present invention, the active principle is either an oil itself or is soluble or made miscible with an oil. Working with such oils in the manufacture of suitable thermoplastic elastomer compositions assists in the homogeneity of the product and improves the dispersion of the active principle. In such a mode of operation there is no addition to the formulation, apart from the active principle, thereby reducing compatibility problems and subsequent manufacturing difficulties. In particular such a method avoids the use of other specialised solvents for the active principle which have been found to be the cause of adverse effects, including non-homogenity, curing problems and loss of elasticity.

It has thus been found that the presence in substantial proportion of oils (optionally with adjuvants such as, for example, anti-degradents and wear resistance enhancers), facilitates the incorporation of an insecticide with the properties of carbaryl, in such a manner as to avoid the difficulties previously experienced and described hereinabove.

As mentioned above, particular useful thermoplastic elastomers are found on styrene and butadiene. The SBS triblock copolymer specifically referred to above may be extended with, for example, 50 parts of oil per 100 parts of polymer. It is possible to use mixtures of two or more such copolymers. There may also be present another polymer such as, for example, an EVA (ethylene-vinylacetate) copolymer and one useful EVA copolymer contains 28% vinyl acetate. Other materials which may be present include inorganic extenders, anti-degradants, microcrystalline waxes, and pigments.

The ability to control the temperatures used in dispersing the active principle in the thermoplastic elastomer to low values is of great importance and solves a problem which had previously existed. Many known polymers require processing temperatures which are so high that decomposition of the active principle at least starts to occur. The choice of our preferred insecticide, Carbaryl, is also of importance and remains active when dispersed into the thermoplastic elastomer.

More generally, the thermoplastic elastomers used in the present invention have the highly desirable property of polymerization at temperatures which are compatible with the stability of the active principle.

The active principle may be dissolved in a resin lubricant or process oil (NYNAS) which provides for homogeneous distribution of the active principle in the thermoplastic elastomer without the addition of other solvents which may, in practice, cause considerable modification of the polymer and make extrusion and other procedures extremely difficult.

The elasticity achieved by the use of the present invention provides an in-built safety factor of stretch. Additionally however, it provides for controlled weight loss (and so availability for action against the fleas and the like) of the active principle (for example insecticide) resulting from the continued flexing of the thermoplastic elastomer under stress, which has the effect of "massaging" the insecticide out through the interstices of the thermoplastic elastomer. Such an effect would not occur in known, substantially inelastic or rigid polymers.

It has been found that collars according to the present invention possess considerable biological activity, particularly against cat fleas (Ctenocephalides felis) and dog fleas (Ctenophalides canis).

The collar of the present invention has a sufficient stretch factor that enables it firstly to be put directly over the animal's head without the need for a buckle or the like fastening device, and secondly to have its own inherent safety factor if the animal was caught by its collar in, for example, a tree, and so not necessarily require a separate elasticated material section (as described hereinabove) or a breakaway safety link for the same purpose. Therefore, the device of the present invention may consist of a continuous length of the composition without any buckle or the like.

However, in accordance with a preferred embodiment of the present invention there is also provided a latch and stud closure which would firstly provide a collar which would be suitable for a greater range of sizes of animal necks, secondly avoid having to stretch the collar and pass it over the animal's head to position it on the neck, and thirdly would provide an opening of the collar itself should a trapped animal not manage to pass its head out of the enlarged neck/head aperture formed by the stretched collar when caught for example on a fence or in a tree. Additionally tongued buckles have been reported to have caused injury to cats and other animals in certain circumstances. Such a closure may comprise of at least one hole, preferably of a "key-hole" shape, near one end of a length of the active principle thermoplastic elastomer composition and a stud, usually T-shaped, projecting perpendicularly to the outer face of the length of the composition, at its other end. The stud is pushed through the hole and the head (or cross-piece of the T) secures it to the end containing the hole. There may be a number of holes to provide a variety of collar sizes when the stud is engaged in the various holes. Also, providing there are at least two holes, it is preferable to have two studs, the two (or any pair of) holes being spaced apart the same distance as the distance between the studs. In such an arrangement two studs may be engaged in a pair of holes, so assisting in keeping the two ends of the length of the composition in line.

Other arrangements which may be employed include an injection moulded "rachet" type of linkage with a soft barb, and a two-piece stud closure with predetermined opening stress.

The nature of the collar of the present invention is such that the surface of the collar has a higher coefficient of friction than normal PVC type collars. This results in the ability to provide a "non-slip" surface when in contact with itself. This feature is of value when the collar is fitted with a fastening which requires friction fit, thus eliminating the need for elaborate tongued buckles and other fitments. Additionally such a fastening can be fitted without need for rivets etc. as the material provides a friction grip to the fastener itself.

The construction of linkages for use in collars of the present invention will now be further described with reference to and as illustrated in the accompanying drawings, but in no manner limited thereto.

In the accompanying drawings:-

Fig.1a is a side view of one end of a length of a composition of the present invention;

Fig.1b is a side view showing the end depicted in Fig.1a in engagement with the other end of the end of a composition of the present invention;

Fig.2 is a plan view of two ends of a length of a composition of the present invention which engage in an alternative manner;

Fig.3 is a side view of another form of linkage;

Fig.4 is a side view of yet another form of linkage;

Fig.5 is a side view of a further form of linkage,

Figs. 6a, b and c are top, side elevation and bottom views of a self releasing clip for use with a collar of the present invention; and

Fig.6d shows the use of the clip of Figs. 6a, b and c.

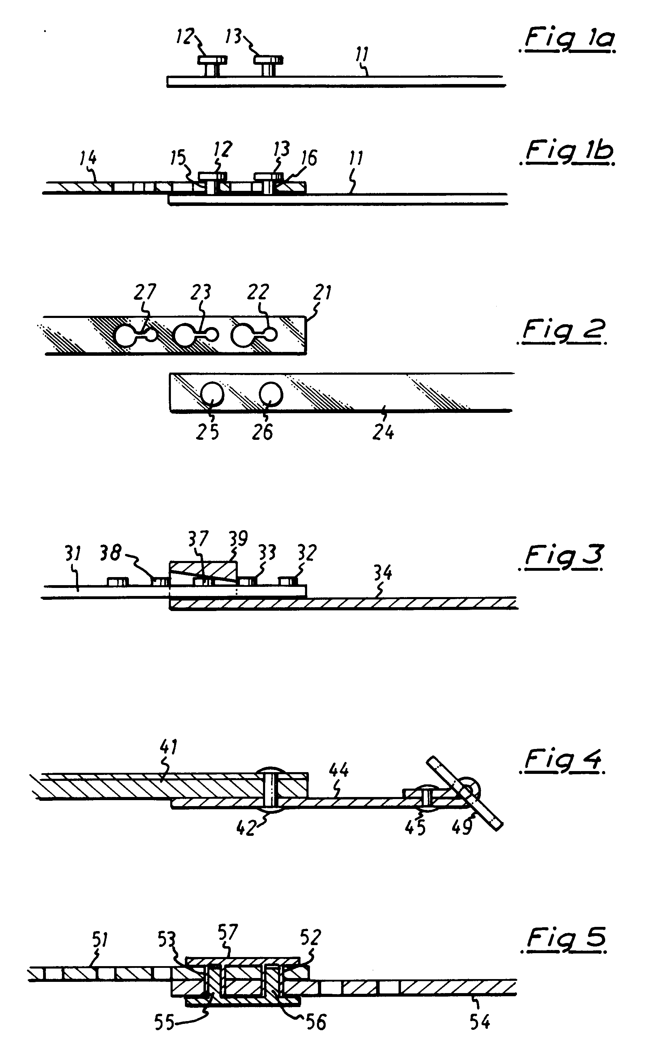

Referring to the Figures, in Fig.1 one end 1 of a length of thermoplastic elastomer has studs 2 and 3 thereon. Studs 2 and 3 engage with holes 5 and 6 at the other end 4 of the length of thermoplastic elastomer.

In Fig.2, one end 21 of a length of thermoplastic elastomer has double connected holes 22,23 and 27 therein. The other end 24 of that length has holes 25 and 26 therein. Each stud can be engaged with the larger of a pair of holes and pulled through the connection to engage in the smaller hole of the pair. By using two studs there is formed a double latch which will open under strain, for example if the collar becomes snagged on a tree branch or the like.

In Fig.3, end 31 has thereon a plurality of studs 32,33,37,38 thereon. End 34 has thereon a soft barb 39 or the like. To close the linkage, end 31 is pushed through the open end of the barb 39 so as to engage on one of the projections 32 to 38 (37 as shown). Such a linkage can be injection moulded and can function as a ratchet.

In Fig.4, end 41 is the end of a length of known bonded impregnated substrate. It is attached to one end of a length 44 of a thermoplastic elastomer composition, according to the present invention, by means of rivet 42. The other end of length 44 is attached to a slide buckle 49 by means of rivet 45.

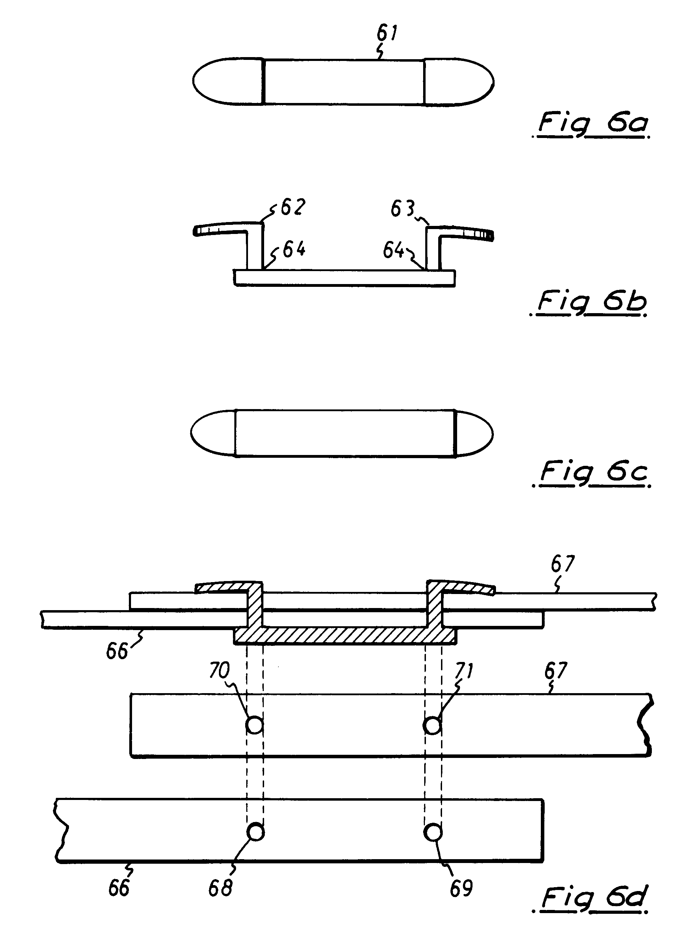

In Fig.5, ends 51 and 54 of a length of a composition according to the present invention have thereon a plurality of holes 52,53 etc. (in end 51) and 55,56 etc. (in end 54). A two-piece plastics stud closure 57 engages a pair of adjacent holes in each of ends 51 and 54. Stud 57 has a predetermined opening stress so as to release the collar should the collar become snagged on the branch of a tree or the like.

In Fig.6 a clip 61 is composed of metal or rigid plastic and is of the order of 3.5 cm. Projections or hooks 62 and 63 thereon are spaced so that the distance between the points 64 and 65 at which they join the main body of the clip 61 is of the order of 2.5 mm.

In Fig.6d the two ends 66 and 67 of the length of the composition of the present invention have holes 68,69 and 70,71 respectively. These pairs of holes are brought into alignment and the clip 61 engages them. The elasticity of the collar enables stretch so that in an emergency the hooks 62 will disengage so releasing the collar. Such an arrangement will operate with a strain of about 2.5 kg or the bodyweight of a small cat.

In the embodiment described above in which the thermoplastic elastomer impregnated with an active principle such as, for example, insecticide comprises only part of the length of the collar, the remainder of the length may be composed of a known form of impregnated bonded substrate. The thermoplastic elastomer section can be rivetted to the bonded substrate section. The other end of the thermoplastic elastomer section may be attached to a slide buckle by means of rivetting a folded back portion of the elastic section.

The present invention will now be further described with reference to, but in no manner limited to, the following Examples which illustrate the production of a composition for use in the device of the present invention and describe efficacy tests of strips of such compositions on cat fleas.

Example 1

The components of the composition to be granulated and extruded were as follows:-

| Item No. | Item | Parts by Weight |
|---|---|---|
| 1 | Europrene SOLT 171 | 100.00 |
| 2 | Finaprene 480 | 29.00 |
| 3 | Evatana 28-05 | 13.00 |
| 4 | Nyflex 210 | 32.00 |
| 5 | Calmote UF | 30.00 |
| 6 | Irganox B900 | 0.12 |
| 7 | Okerin 1891 | 12.00 |
| 8 | Carbaryl | 21.60 |
| 9 | Cramophtal Red BRN MC | 0.01 |
| 10 | Cramophtal Yellow 3G MC | 0.09 |
| 11 | Vitacom TPE C003 | 0.01 |
| | | 237.83 |

The items listed above can be classified as follows:-

1) An SBS (Styrene - Butadiene - Styrene) block copolymer extended with 50 parts of oil per 100 parts of polymer. (Supplier Enichem).

2) An SBS block copolymer extended with 50 parts of oil per 100 parts of copolymer. (Supplier Fina).

3) An EVA copolymer (Ethylene Vinyl Acetate), containing 28% Vinyl Acetate, with Melt Flow rate of 5. (Supplier Atochem).

4) A process oil. (Supplier Nynas).

5) An inorganic extender - a grade of calcium carbonate. (Supplier Derbyshire Stone).

6) An antidegradant (a 1:4 mixture of OCTADECYL 3 -(3,5-DI-TERT.BUTYL-4-HYDROXYPHENYL)-PROPIONATE, and TRIS(1,3-DI-TERT.BUTYLPHENYL)PHOSPHITE) (Supplier Ciba-Geigy).

7) A microcrystalline wax. (Supplier Astor Waxes).

8) Carbaryl (1-Naphthyl Methylcarbamate).

9) Red pigment masterbatch. (Supplier Ciba-Geigy).

10) Yellow pigment masterbatch. (Supplier Ciba-Geigy).

11) Carbon black pigment masterbatch. (Supplier Vitacom).

The names of Items 1 to 11 are Trade Marks.

The mixing of the base polymer, antidegradents, process aids, extenders, pigments and the insecticide was performed on a pilot scale screw-type blender of a standard type manufactured by Carter Bros. (Rochdale).

The resultant mixture was then granulated on a standard laboratory granulator in order to present a suitable solid form for extrusion.

The granular material was then extruded on a Francis Shaw extruder which contained a 4.45 cm (1-3/4 inches) screw. A minimum of 15:1 length/diameter screw ratio was required to extrude this type of material and this pilot scale machine was able to provide this requirement. The compression ratio from the feed zone, through the metering zone to the die zone was in the range of 2:1 to 2.5:1.

A special die was made to produce the specific measurements as above. This was specially shaped to allow for shear stresses and resultant deformation in the thickness and was also hollowed out on the extruder side to prevent "molecular shock".

On the extruder, the following settings were eventually made to produce a uniform extrudate of satisfactory appearance and consistency:

Feed Zone Temperature: 100°C

Metering Zone Temperature: 110°C

Die Temperature: 120°C

A running speed of approximately 2 metres extrudate per minute was set so that the resultant product could be hand-coiled easily and the hot extrudate protected from excess stress. The extrudate was 3mm thick and 12 mm wide.

An extrudate was produced which met the desired requirements. The measurements of the extrudate were within tolerances and the colour, tan, satisfactory. The surface of the product was smooth and without defects and the internal structure homogeneous upon inspection. A total elongation of at least 50% of the original length could be produced without exceeding the elastic limit and therefore the elastomeric properties expected had been retained.

The stress-strain values on the extrudate were measured and the following values obtained:

| % Strain | Cross Sectional Area ($mm^2$) | Force (N) | Modulus (MPa) |
|---|---|---|---|
| 50 | 9.36 | 11.2 | 1.2 |
| 100 | 10.02 | 15.0 | 1.5 |
| 150 | 9.71 | 15.5 | 1.6 |
| 200 | 10.02 | 18.0 | 1.8 |
| 250 | 9.71 | 18.4 | 1.9 |
| 300 | 10.02 | 21.0 | 2.1 |

Elongation at Break = 870% Tensile Strength @ Break = 4.1 MPA

The unusually low operating temperatures used were well within the degradation limits of the insecticide.

Approximately 50 metres of extrudate was produced which was deemed adequate for efficacy trials and stability measurements.

Example 2

Recently emerged, unfed adult cat fleas, Ctenocephalides felis, taken from a laboratory colony were used in these experiments. The colony was established from samples of eggs and larvae taken from houses in Oxford, UK: thus the fleas display the usual susceptibility to insecticides expected in populations exposed to the usual variety of products commonly available for domestic use.

In the experimental trials 10 to 20 fleas were confined in a conical flask with a piece of moistened filter paper and a piece of an insecticide-impregnated plastics strip 12 mm wide and 20 mm long, produced in a manner as described in Example 1. Five experimental trials were set up. Controls consisted of 5 flasks with 10 to 20 fleas per flask with moistened filter paper, but no impregnated strip. The experiment ran for 24 hours, and at the end of that time mortality of control and trial fleas was assessed. The results are given in the Table.

After 24 hours, there was 100% mortality of trial fleas exposed to the insecticide-impregnated plastics strip. Control mortality was 25.7%. Control mortality was unusually high in this experiment, but since the trial results were unequivocal, with complete kill of fleas, it was not considered necessary to repeat the experiments with new fleas. Knockdown of trial fleas was fairly rapid. Within 1 hour of the experiment beginning two or three fleas in each trial flask showed evidence of terminal insecticide action. After 20 hours all but one flea among the 74 trial fleas were dead.

Thus the insecticide-impregnated plastics strip was highly effective in that it produced a complete kill of fleas over a 24 hour period.

## TABLE 1

## Mortality of control fleas and trial fleas exposed to insecticide-impregnated plastics strip of the present invention

|  | No.of fleas alive at start | No.of fleas alive after 24 hours | % Mortality |
|---|---|---|---|
| TRIAL 1 | 12 | 0 | 100 |
| " 2 | 12 | 0 | 100 |
| " 3 | 17 | 0 | 100 |
| " 4 | 13 | 0 | 100 |
| " 5 | 20 | 0 | 100 |
| TOTALS | 74 | 0 | 100 |
| CONTROL 1 | 11 | 10 | 9.1 |
| " 2 | 15 | 8 | 46.7 |
| " 3 | 16 | 12 | 25.0 |
| " 4 | 19 | 13 | 31.6 |
| " 5 | 13 | 12 | 7.7 |
| TOTALS | 74 | 55 | 25.7 |

Example 3.

In this Example, the active principle Carbaryl used in Example 1 was replaced by repellent N-diethyl toluamide. This compound being in liquid form can be more readily introduced into the mix. The resultant collar possesses an insect repellent property. This can be demonstrated by a simple in vitro experiment, as follows:-

Simple test method for repellent formulation collar;

Large Petri dishes were used as test chambers - (It is important that they be at least 14cms in diameter as the dispersing effect may be lost in the general pervading presence of the insecticide).

The base of the Petri dish was dried with clean filter paper and for convenience of recording a central line was drawn on the paper. An important precaution in the work was to ensure multilateral lighting since unfed fleas are attracted to light: any unilateral lighting can give misleading experimental results. Each test consisted of 5 trials with 10-20 unfed adult cat fleas.

5cm (2 inch) portion of impregnated collar was placed in the centre of one half of the circular lined dish. Ctenocephalides felis. The numbers of fleas on the filter paper wer counted at 5, 10, 15, 20, 30, 45 and 60 minutes after the start of the experiment. Chi-squared (/) statistical tests were applied to the data to determine the significance of the results. Where $p$ = more than 0.05, the results are regarded as not significant. Results are shown in Table 2.

The results indicate that after 10 minutes only 17% of the fleas on average remained on the side adjacent to the impregnated collar material and at 15 minutes this had fallen to 13%.

After 20 minutes 22.2% are found on the active half of the paper, i.e. 77.8% are repelled. These figures reflect a good level of efficiency in the repellency of the fomulations; it would be unrealistic to expect a total repellent effect under these conditions.

TABLE 2

| TRIAL | NO.OF FLEAS PER TRIAL | NO. OF FLEAS FOUND ON ACTIVE SIDE ACCORDING TO TIME (IN MINUTES) | | | | | | |
|---|---|---|---|---|---|---|---|---|
| | | 5 | 10 | 15 | 20 | 30 | 45 | 60 |
| 1 | 10 | 6 | 4 | 4 | 7 | 6 | 7 | 4 |
| 2 | 11 | 2 | 1 | 1 | 0 | 3 | 4 | 3 |
| 3 | 11 | 2 | 1 | 4 | 4 | 3 | 3 | 3 |
| 4 | 12 | 5 | 2 | 2 | 3 | 3 | 5 | 2 |
| 5 | 12 | 6 | 3 | 2 | 4 | 6 | 6 | 5 |
| TOTALS | 56 | 21 | 11 | 13 | 18 | 21 | 25 | 17 |
| $\chi^2$ | | 3.5 | 20.64 | 16.07 | 7.14 | 3.5 | 0.64 | 8.64 |

$p$ = between 0.10 and 0.05    <0.0001   <0.001   between 0.01 and 0.001   between 0.01 and 0.5   between 0.5 and 0.2   between 0.01 and 0.001

Table 2:    Results of trials and impregnated collar material, against adult cat fleas, using large petri dishes.

**Claims**

1. A device capable of being fastened to the neck of an animal which comprises at least a portion of the length of the device being of a material which is an active principle dissolved in or made miscible with an oil or is an active principle in the form of an oil together with a thermoplastic elastomer, and means for attaching the device to the animal.

2. A device according to claim 1, wherein the active principle is an oil which is a natural oil.

3. A device according to claim 1 or 2, wherein the active principle is a synthetic or naturally occurring repellent.

4. A device according to claim 1, wherein the oil in which the active principle is soluble or miscible is a process oil.

5. A device according to claim 4, wherein the oil is derived from the distillation and refining of a naphthenic crude oil.

10

EP 0 338 821 B1

6. A device according to claim 5, wherein the oil is a distillate (petroleum) solvent refined heavy naphthenic oil.

7. A device according to any of claims 1 and 3 to 6, wherein the active principle is soluble in an oil used in the thermoplastic elastomer/active principle composition.

8. A device according to any of claims 1 to 7, wherein the thermoplastic elastomer is based on styrene and butadiene.

9. A device according to any of claims 1 to 8, wherein the active principle is an insecticide.

10. A device according to claim 9, wherein the insercticide is a carbamate or a pyrethroid.

11. A device according to claim 10, wherein the insecticide is 1-naphthyl-methylcarbamate.

12. A device according to any of claims 1 to 11, wherein the active principle comprises another material beneficial to the health or well-being of the animal to which the device is fastened.

13. A device according to any of claims 1 to 12, wherein a substantial portion of the length of the device comprises a known type of animal collar material and another portion is composed of a thermoplastic elastomer having disposed therein the active principle.

14. A device according to claim 13, wherein the known type of animal collar material is also impregnated with the active principle.

15. A device according to any of claims 1 to 14, which is a flea collar.

16. A method for the production of a device according to any of claims 1 to 15, which comprises forming a material comprising a thermoplastic elastomer and either (a) an oil and an active principle which is soluble or miscible in the oil or (b) an active principle which is an oil, which material comprises at least a portion of the length of the device.

17. A method according to claim 16, wherein the active principle is incorporated into the oil and the active principle/oil is added to the thermoplastic elastomer.

18. A method according to claim 16, wherein the active principle is incorporated into a composition which comprises both the oil and the thermoplastic elastomer.

**Patentansprüche**

1. Vorrichtung, die am Hals eines Tieres befestigt werden kann, umfassend wenigstens einen Teil der Länge der Vorrichtung aus einem Material, bei dem es sich um einen aktiven Stoff handelt, der in Öl gelöst oder mit Öl gemischt ist oder bei dem es sich um einen aktiven Stoff in Form eines Öls und eines thermoplastischen Elastomers handelt, sowie Mittel zum Befestigen der Vorrichtung an dem Tier.

2. Vorrichtung nach Anspruch 1, wobei der aktive Stoff ein natürliches Öl ist.

3. Vorrichtung nach Anspruch 1 oder 2, wobei der aktive Stoff ein synthetisches oder natürlich vorkommendes Repellent ist.

4. Vorrichtung nach Anspruch 1, wobei das Öl, in dem der aktive Stoff löslich bzw. mit dem der aktive Stoff mischbar ist, ein Weichmacheröl ist.

5. Vorrichtung nach Anspruch 4, wobei das Öl durch Destillieren und Raffinieren von Naphthenerdöl gewonnen wird.

6. Vorrichtung nach Anspruch 5, wobei das Öl ein mit einem Destillat (Erdöl) lösendes, raffiniertes, schweres naphthenisches Öl ist.

11

EP 0 338 821 B1

**7.** Vorrichtung nach einem der Ansprüche 1 und 3 bis 6, wobei der aktive Stoff in einem in der Zusammensetzung aus thermoplastischem Elastomer/aktivem Stoff verwendeten Öl löslich ist.

**8.** Vorrichtung nach einem der Ansprüche 1 bis 7, wobei das thermoplastische Elastomer auf Styrol und Butadien basiert.

**9.** Vorrichtung nach einem der Ansprüche 1 bis 8, wobei der aktive Stoff ein Insektizid ist.

**10.** Vorrichtung nach Anspruch 9, wobei das Insektizid ein Karbamat oder ein Pyrethroid ist.

**11.** Vorrichtung nach Anspruch 10, wobei das Insektizid 1-Naphthyl-Methylkarbamat ist.

**12.** Vorrichtung nach einem der Ansprüche 1 bis 11, wobei der aktive Stoff ein weiteres Material umfaßt, das sich günstig auf die Gesundheit bzw. das Wohlbefinden des Tieres auswirkt, an dem die Vorrichtung befestigt ist.

**13.** Vorrichtung nach einem der Ansprüche 1 bis 12, wobei ein wesentlicher Teil der Länge der Vorrichtung ein bekanntes Tierhalsbandmaterial beinhaltet und ein anderer Teil aus einem thermoplastischen Elastomer zusammengesetzt ist, in dem sich der aktive Stoff befindet.

**14.** Vorrichtung nach Anspruch 13, wobei das bekannte Tierhalsbandmaterial ebenfalls mit dem aktiven Stoff imprägniert ist.

**15.** Vorrichtung nach einem der Ansprüche 1 bis 14, bei der es sich um ein Flohhalsband handelt.

**16.** Verfahren zur Herstellung einer Vorrichtung nach einem der Ansprüche 1 bis 15, umfassend die Bildung eines Materials, das ein thermoplastisches Elastomer und entweder (a) ein Öl und einen aktiven Stoff, der im Öl löslich oder mit dem Öl mischbar ist, oder (b) einen aktiven Stoff enthält, bei dem es sich um ein Öl handelt, wobei wenigstens ein Teil der Länge der Vorrichtung aus dem Material besteht.

**17.** Verfahren nach Anspruch 16, wobei der aktive Stoff in dem Öl integriert ist und der aktive Stoff/das Öl dem thermoplastischen Elastomer hinzugefügt wird.

**18.** Verfahren nach Anspruch 16, wobei der aktive Stoff in einer Zusammensetzung integriert ist, die das Öl und das thermoplastische Elastomer beinhaltet.

**Revendications**

**1.** Dispositif pouvant être attaché au cou d'un animal qui comporte au moins une portion de la longueur du dispositif faite en un matériau qui est un principe actif dissous dans une huile ou rendu miscible dans celle-ci ou qui est un principe actif sous la forme d'une huile alliée à un élastomère thermoplastique, et moyens d'attache de ce dispositif sur l'animal.

**2.** Dispositif selon la revendication 1, où le principe actif est une huile qui est une huile naturelle.

**3.** Dispositif selon la revendication 1 ou 2, où le principe actif est un agent répulsif synthétique ou naturel.

**4.** Dispositif selon la revendication 1, où l'huile dans laquelle le principe actif est soluble ou miscible est une huile ramollissante.

**5.** Dispositif selon la revendication 4, où l'huile est dérivée de la distillation et de l'affinage d'un pétrole brut naphténique.

**6.** Dispositif selon la revendication 5, où l'huile est une huile lourde naphténique affinée au solvant (de pétrole) distillé.

12

**7.** Dispositif selon l'une quelconque des revendications 1 et 3 à 6, où le principe actif est soluble dans une huile utilisée dans la composition principe actif/élastomère thermoplastique.

**8.** Dispositif selon l'une quelconque des revendications 1 à 7, où l'élastomère thermoplastique est basé sur du styrol et du butadiène.

**9.** Dispositif selon l'une quelconque des revendications 1 à 8, où le principe actif est un insecticide.

**10.** Dispositif selon la revendication 9, où l'insecticide est un carbamate ou une pyréthrine.

**11.** Dispositif selon la revendication 10, où l'insecticide est un 1-naphtyl-méthyl-carbamate.

**12.** Dispositif selon l'une quelconque des revendications 1 à 11, où le principe actif comporte un autre matériau bénéfique pour la santé ou le bien-être de l'animal auquel est attaché le dispositif.

**13.** Dispositif selon l'une quelconque des revendications 1 à 12, où une portion appréciable de la longueur du dispositif comporte un type connu de matériau de collier d'animal et une autre portion est composée d'un élastomère thermoplastique à l'intérieur duquel est placé le principe actif.

**14.** Dispositif selon la revendication 13, où le type connu de matériau de collier d'animal est également imprégné du principe actif.

**15.** Dispositif selon l'une quelconque des revendications 1 à 14, qui est un collier anti-puces.

**16.** Procédé de production d'un dispositif selon l'une quelconque des revendications 1 à 15, qui comprend la formation d'un matériau comportant un élastomère thermoplastique et soit (a) une huile et un principe actif qui est soluble ou miscible dans l'huile soit (b) un principe actif qui est une huile, matériau comportant au moins une portion de la longueur du dispositif.

**17.** Procédé selon la revendication 16, où le principe actif est incorporé dans l'huile et le principe actif/huile est ajouté à l'élastomère thermoplastique.

**18.** Procédé selon la revendication 16, où le principe actif est incorporé dans une composition qui comporte tant l'huile que l'élastomère thermoplastique.

_Fig 1a_

_Fig 1b_

_Fig 2_

_Fig 3_

_Fig 4_

_Fig 5_

_Fig 6a_

_Fig 6b_

_Fig 6c_

_Fig 6d_